(19) Europäisches Patentamt / European Patent Office / Office européen des brevets

(11) **EP 3 027 302 B1**

(12) **EUROPÄISCHE PATENTSCHRIFT**

(45) Veröffentlichungstag und Bekanntmachung des Hinweises auf die Patenterteilung:
**14.06.2017   Patentblatt 2017/24**

(21) Anmeldenummer: **14741242.3**

(22) Anmeldetag: **10.07.2014**

(51) Int Cl.:
**B01J 3/00** (2006.01)    **C01B 33/035** (2006.01)

(86) Internationale Anmeldenummer:
**PCT/EP2014/064851**

(87) Internationale Veröffentlichungsnummer:
**WO 2015/014590 (05.02.2015 Gazette 2015/05)**

(54) **VERFAHREN ZUR VERMEIDUNG DER BELAGSBILDUNG AUF EINEM SCHAUGLAS BEI DER HERSTELLUNG VON POLYKRISTALLINEM SILICIUM**

METHOD FOR PREVENTING THE FORMATION OF DEPOSITS ON A SIGHT GLASS IN THE MANUFACTURE OF POLYCRYSTALLINE SILICON

PROCÉDÉ POUR ÉVITER LA FORMATION DE DÉPÔTS SUR UN HUBLOT D'OBSERVATION DANS LA FABRICATION DE SILICIUM POLYCRISTALLIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2013   DE 102013214799**

(43) Veröffentlichungstag der Anmeldung:
**08.06.2016   Patentblatt 2016/23**

(73) Patentinhaber: **Wacker Chemie AG**
**81737 München (DE)**

(72) Erfinder:
- **KLOSE, Göran**
  **84508 Hirten (DE)**
- **KRAUS, Heinz**
  **84367 Zeilarn (DE)**
- **SALZEDER, Franz**
  **84339 Unterdietfurt (DE)**

(74) Vertreter: **Potten, Holger et al**
**Wacker Chemie AG**
**Zentralbereich Patente, Marken und Lizenzen**
**Hanns-Seidel-Platz 4**
**81737 München (DE)**

(56) Entgegenhaltungen:
WO-A2-97/07051          CN-B- 102 311 120
CN-Y- 201 302 372       DE-B- 1 300 516
GB-A- 805 812           JP-A- S61 192 339
JP-A- 2010 254 561

**EP 3 027 302 B1**

**Beschreibung**

Gegenstand der Erfindung ist ein Verfahren zur Herstellung von polykristallinem Silicium.

Polykristallines Silicium (kurz: Polysilicium) dient als Ausgangsmaterial bei der Herstellung von einkristallinem Silicium mittels Tiegelziehen (Czochralski- oder CZ-Verfahren)- oder mittels Zonenschmelzen (Floatzone oder FZ-Verfahren). Dieses einkristalline Silicium wird in Scheiben (Wafer) zertrennt und nach einer Vielzahl von mechanischen, chemischen und chemo-mechanischen Bearbeitungen in der Halbleiterindustrie zur Fertigung von elektronischen Bauelementen (Chips) verwendet.

Insbesondere wird aber polykristallines Silicium in verstärktem Maße zur Herstellung von ein- oder multikristallinem Silicium mittels Zieh- oder Gieß-Verfahren benötigt, wobei dieses ein- oder multikristalline Silicium zur Fertigung von Solarzellen für die Photovoltaik dient.

Das polykristalline Silicium wird üblicherweise mittels des Siemens-Prozesses hergestellt. Dabei werden in einem glockenförmigen Reaktor ("Siemens-Reaktor") dünne Filamentstäbe ("Dünnstäbe") aus Silicium durch direkten Stromdurchgang erhitzt und ein Reaktionsgas enthaltend eine Silicium enthaltende Komponente und Wasserstoff eingeleitet.

Die Silicium enthaltende Komponente des Reaktionsgases ist in der Regel Monosilan oder ein Halogensilan der allgemeinen Zusammensetzung $SiH_nX_{4-n}$ (n=0, 1, 2, 3; X = Cl, Br, I). Bevorzugt handelt es sich um ein Chlorsilan oder Chlorsilangemisch, besonders bevorzugt um Trichlorsilan. Überwiegend wird $SiH_4$ oder $SiHCl_3$ (Trichlorsilan, TCS) im Gemisch mit Wasserstoff eingesetzt.

In EP 2 077 252 A2 wird der typische Aufbau eines in der Herstellung von Polysilicium zum Einsatz kommenden Reaktortyps beschrieben.

Der Reaktorboden ist mit Elektroden versehen, die die Dünnstäbe aufnehmen, auf denen während des Wachstumsprozesses Silicium abgeschieden wird, die also zu den gewünschten Stäben aus Polysilicium wachsen. Üblicherweise werden jeweils zwei Dünnstäbe mit einer Brücke zu einem Dünnstabpaar verbunden, das über die Elektroden und über externe Vorrichtungen einen Stromkreis bilden, was dazu dient, die Stabpaare auf eine bestimmte Temperatur zu heizen.

Ferner ist der Reaktorboden zusätzlich mit Düsen versehen, die den Reaktor mit frischem Gas versorgen. Das Abgas wird über Öffnungen wieder aus dem Reaktionsraum geführt.

Die zugeführte Menge an Reaktionsgasen wird üblicherweise in Abhängigkeit vom Stabdurchmesser variiert, d.h. in der Regel mit zunehmendem Stabdurchmesser erhöht.

An den erhitzten Stäben und der Brücke scheidet sich hochreines Polysilicium ab, wodurch der Stabdurchmesser mit der Zeit anwächst (CVD = Chemical Vapour Deposition / Gasphasenabscheidung).

In DE 102 007 047 210 A1 ist ein Verfahren offenbart, das zu Polysiliciumstäben mit vorteilhafter Biegefestigkeit führt. Ferner ist der spezifische Energieverbrauch bei diesem Verfahren besonders niedrig. Prozesstechnisch wird ein Maximalwert des Mengenstromes des Chlorsilan-Gemisches in weniger als 30 Stunden - bevorzugt in weniger als 5 Stunden - erreicht, wobei die Temperatur an der Unterseite der Brücke zwischen 1300 °C und 1413 °C beträgt.

In DE 10 2007 023 041 A1 wird ein weiteres Verfahren zur Herstellung von Polysilicium und zwar für FZ (Float Zone)-Silicium beschrieben. Es sieht bis zu einem Stabdurchmesser von 30 mm eine Stabtemperatur von 950 bis 1090°C und einen bestimmten Anteil an Chlorsilanen im Reaktionsgas vor, und spätestens nach Erreichen eines Stabdurchmessers von 120 mm Umstellung der Stabtemperatur auf 930 bis 1030°C und Erhöhung des Anteils an Chlorsilanen im Reaktionsgas. Abrupte Änderungen der Wachstumsbedingungen während der gesamten Abscheidezeit dürfen nicht vorgenommen werden.

US 20120048178 A1 offenbart ein Verfahren zur Herstellung von polykristallinem Silicium, umfassend Einleiten eines Reaktionsgases enthaltend eine Silicium enthaltende Komponente und Wasserstoff mittels einer oder mehreren Düsen in einen Reaktor enthaltend wenigstens einen erhitzten Filamentstab, auf dem Silicium abgeschieden wird, dadurch gekennzeichnet, dass eine Archimedes-Zahl $Ar_n$, die Strömungsverhältnisse im Reaktor beschreibt, in Abhängigkeit vom Füllgrad FG, der das Verhältnis von einem Stabvolumen zu einem Reaktorleerraumvolumen in Prozent angibt, für einen Füllgrad FG von bis zu 5% innerhalb des nach unten durch die Funktion $Ar = 2000 \times FG^{-0,6}$ und nach oben durch die Funktion $Ar = 17000 \times FG^{-0,9}$ begrenzten Bereichs liegt, und bei einem Füllgrad von größer als 5% in einem Bereich von mindestens 750 bis höchstens 4000 liegt.

Der Füllgrad eines Reaktors gibt das Verhältnis des Volumens der Stäbe zum Leerraumvolumen des Reaktors in Prozent an. Das Leerraumvolumen des Reaktors ist konstant. Der Füllgrad nimmt also mit zunehmender Prozessdauer zu, da sich das Volumen der Stäbe erhöht.

Die Archimedes-Zahl ist gegeben durch

$$Ar = \pi * g * L^3 * A_d * (T_{Stab} - T_{Wand}) / (2 * Q^2 * (T_{Stab} + T_{Wand}))$$

wobei g für die Erdbeschleunigung in m/s$^2$, L für die Stablänge der Filamentstäbe in m, Q für den Volumenstrom des Gases in m$^3$/s unter Betriebsbedingungen (p, T), $A_d$ für die Summe aller Düsenquerschnittsflächen in m$^2$, $T_{Stab}$ für die Stabtemperatur in K und $T_{Wand}$ für die Wandtemperatur in K stehen. Die Stabtemperatur beträgt vorzugsweise 1150K bis 1600K. Die Wandtemperatur beträgt vorzugsweise 300K bis 700K.

Bei der Herstellung dicker polykristalliner Siliciumstäbe (mit Durchmesser >100 mm) ist relativ häufig zu beobachten, dass die Stäbe Bereiche mit sehr rauer Oberfläche ("Popcorn") aufweisen. Diese rauen Bereiche müssen von dem restlichen Material abgetrennt und zu wesentlich niedrigeren Preisen als der restliche Siliciumstab verkauft werden.

Aus US 5904981 A ist bekannt, dass durch eine zeitweilige Reduzierung der Temperatur der Stäbe der Anteil des Popcorn-Materials verringert werden kann. Dabei wird offenbart, dass ausgehend von einem polykristallinen Silicumstab mit einem Durchmesser von 5 mm als Filament (Dünnstab) eine Oberflächentemperatur des Stabs bei 1030°C gehalten und polykristallines Silicium abgeschieden wird, wobei wenn der Stabdurchmesser 85 mm erreicht, der elektrische Strom konstant gehalten wird, wodurch die Temperatur sinkt, und sobald eine Temperatur von 970°C erreicht wird, die Temperatur der Stäbe langsam über einen Zeitraum von 30 Stunden wieder bis auf 1030°C erhöht wird, wobei die Abscheidung gestoppt wird, wenn der Stabdurchmesser 120 mm erreicht. Der Popcorn-Anteil beträgt in diesem Fall 13%. Solche Änderungen führen allerdings dazu, dass der Prozess langsamer läuft und damit die Ausbringung reduziert wird, was die Wirtschaftlichkeit verschlechtert.

Bei den bekannten Verfahren zur Abscheidung von polykristallinem Silicium ist es also erforderlich, die Stabtemperatur zu regeln. Die Temperatur an der Oberfläche der Stäbe ist der entscheidende Parameter im Verfahren zur Herstellung von polykristallinem Silicium, da die Abscheidung des polykristallinen Siliciums an der Staboberfläche erfolgt.

Dazu muss die Stabtemperatur gemessen werden.

Die Messung der Stabtemperatur erfolgt üblicherweise mit Strahlungspyrometern an den Oberflächen der senkrechten Stäbe.

Aufgrund seiner Materialeigenschaften ist die berührungslose Temperaturmessung von Silicium sehr anspruchsvoll. Dies liegt daran, dass der Emissionsgrad des Materials über das Infrarotspektrum stark variiert und zudem von der Materialtemperatur abhängig ist. Um dennoch genaue und wiederholbare Messergebnisse zu erzielen, filtern die Hersteller die Geräte auf etwa 0,9 $\mu$m ab, werten also nur einen durch einen Filter auf einen bestimmten Wellenlängenbereich eingeschränkten kleinen Teil des Strahlungsspektrums aus, da in diesem Wellenlängenbereich der Emissionsgrad von Silicium sowohl relativ hoch als auch unabhängig von der Temperatur ist.

Aufgrund von Wasserstoff in der Atmosphäre kommen für die Pyrometer üblicherweise spezielle explosionsgeschützte Gehäuse zum Einsatz.

Optischen Zugang erhält das Pyrometer über ein Schauglas bzw. ein Fenster. Die Linse oder das Fenster für Geräte im nahen Infrarotbereich besteht aus Glas oder Quarzglas.

Die Pyrometer sind an den Schaugläsern außerhalb des Reaktors montiert und auf den zu messenden Polysiliciumstab ausgerichtet. Das Schauglas dichtet den Reaktor über eine transparente Glasfläche und Dichtungen zur Umgebung ab.

Nun hat sich gezeigt, dass sich im Laufe des Abscheideprozesses eine Belagschicht auf dem Schauglas ausbildet, die je nach Fahrweise unterschiedlich dick ausfallen kann. Dies betrifft insbesondere die reaktorseitige (innere) Glasoberfläche. Diese Belagsschicht bewirkt eine Abschwächung der gemessenen Strahlungsintensität. Dadurch werden vom Pyrometer zu niedrige Temperaturen gemessen. Dies hat zur Folge, dass die Stabtemperaturen durch die elektrische Leistungsregelung des Reaktors zu hoch eingestellt werden, wodurch unerwünschte Prozesseigenschaften wie Staubabscheidung, unzulässig starkes Popcornwachstum, lokales Aufschmelzen der Siliziumstäbe etc. hervorgerufen werden. Im schlimmsten Fall - nämlich bei zu starken Belägen - muss der Prozess vorzeitig beendet werden.

Wirtschaftliche Nachteile durch nicht spezifikationsgerechte und damit abgewertete Produkte oder erhöhte Herstellungskosten durch vorzeitig abgestellte oder ausgefallene Chargen sind die Folgen von Belägen auf dem Schauglas.

Im Stand der Technik wurden Anstrengungen unternommen, die Belagsbildung auf den Glasoberflächen zu minimieren, indem ein inertes Gas oder Wasserstoff über die Glasoberfläche geblasen wird, um Silane bzw. Chlorsilane, die dazu neigen, sich auf dem Glas abzuscheiden, wegzuspülen bzw. von der Glasoberfläche fernzuhalten.

JP2010254561 A2 beschreibt ein Schauglas, bei dem Wasserstoff als Spülgas verwendet und in den Tubus eingedüst wird. Das Verhältnis von Tubuslänge zu Tubusdurchmesser (L/D) liegt bei dieser Anordnung zwischen 5 und 10. Nachteilig ist der stark eingeschränkte Sichtbereich durch den langen, dünnen Schauglastubus.

CN 201302372Y offenbart ebenfalls ein Schauglas, bei dem an der Schauglaslinse anhaftende Partikel entfernt werden sollen, indem an der Reaktion beteiligtes Gasmedium (Wasserstoff) eingeblasen wird, durch das die Reinigung der Linse erfolgt. Das innere Verbindungsrohr ist an einem Ende mit einer Gasmedium-Reinigungsvorrichtung verbunden, so dass die innenseitige Oberfläche der Schauglas-Linse bei laufendem Betrieb gereinigt werden kann. Zwischen der ersten Schauglas-Linse und der zweiten Schauglas-Linse befindet sich ein Kühlwasserkanal, über den die erste Schauglas-Linse und die zweite Schauglas-Linse gekühlt und gereinigt werden können.

CN102311120 B offenbart ein Schauglas, bei dem Wasserstoff als Spülgas durch eine Vielzahl von Bohrungen schräg auf die Schauglasfläche gerichtet eingedüst wird. Die Bohrungen sind am gesamten Umfang des Schauglastubusses verteilt und radial zur Achse des Schauglastubusses ausgerichtet.

Es hat sich jedoch gezeigt, dass dabei die Belagsbildung nur in Teilbereichen des Schauglases verhindert, in anderen Bereichen aber sogar noch verstärkt wird. Zudem konnte zeitweise beobachtet werden, dass sich die Positionen von belagsfreien Bereichen auf der Schauglasoberfläche während des Prozesses veränderten. Somit sind keine reproduzierbaren Temperaturmessungen möglich.

Aus dieser Problematik ergab sich die Aufgabenstellung der Erfindung. Das Schauglas soll über den gesamten Chargenverlauf frei bleiben von Belägen und Verunreinigungen.

Die Aufgabe wird gelöst durch ein Verfahren zur Herstellung von polykristallinem Silicium, umfassend Einleiten eines Reaktionsgases enthaltend eine Silicium enthaltende Komponente und Wasserstoff in einen Reaktor enthaltend wenigstens einen erhitzten Filamentstab, auf dem polykristallines Silicium abgeschieden wird, wobei der Reaktor wenigstens ein tubusförmiges Schauglas umfasst, das mit einem reaktorseitigen Ende an einer Öffnung in der Reaktorwand befestigt ist und am anderen Ende eine Glasfläche aufweist, wobei über Bohrungen im Schauglastubus während der Abscheidung ein Spülgas zugeführt wird, dadurch gekennzeichnet, dass ein Spülgasstrom nahe der Glasfläche des Schauglases und im Wesentlichen parallel zu der Glasfläche verläuft und von diesem Spülgasstrom in Richtung reaktorseitiges Ende des Schauglases beabstandet wenigstens ein weiterer Spülgasstrom gegenüber der Glasfläche in Richtung des reaktorseitigen Endes des Schauglases geneigt verläuft.

Die Erfinder haben erkannt, dass bei den im Stand der Technik vorgeschlagenen Lösungen der Kontakt des siliciumhaltigen Reaktionsgases mit der Glasoberfläche des Schauglases deshalb nicht zuverlässig verhindert werden konnte, weil mit den auf die Glasfläche des Schauglases gerichteten Spülgasstrahlen eine Injektorwirkung verbunden war, die siliciumhaltiges Reaktionsgas an die Glasoberfläche beförderte und anders als gewünscht zumindest in Teilbereichen zu einer Belagsbildung führte.

Daher wurde ein Schauglas entwickelt, welches eine neuartige Spülgaszuführung aufweist, die einen Kontakt der reaktorseitigen Glasflächen mit dem Reaktionsgas (Chlorsilane) unterdrückt und damit eine Belagsbildung verhindert.

Das Spülgas wird hierbei anders als im Stand der Technik an mehreren Positionen in den Schauglastubus eingedüst.

Ein Spülgasstrom wird in der Nähe der Glasfläche des Tubus eingebracht. Dieser verläuft im Wesentlichen parallel zur Glasfläche.

Zu diesem Zweck sind vorzugsweise parallel zur Glasfläche ausgerichtete, versetzt angeordnete Bohrungsreihen in unmittelbarer Nähe zur Glasfläche vorgesehen. Dadurch wird quasi ein "Vorhang" aus Spülgas erzeugt, der das Reaktionsgas von der Glasfläche fernhalten kann.

Allerdings kann dies ohne weitere Maßnahmen nur dann erreicht werden, wenn die zugeführte Spülgasmenge geeignet gewählt wird.

Um von der zugeführten Spülgasmenge unabhängig zu sein, ist erfindungsgemäß wenigstens ein zweiter Spülgasstrom vorgesehen, der vom ersten Spülgasstrom in Richtung reaktorseitiges Ende des Tubus beabstandet ist.

Dieser zweite oder die weiteren Spülgasströme verlaufen nicht parallel zur Glasfläche des Schauglases, sondern schräg, nämlich gegen die Ebene der Glasfläche des Schauglases geneigt und zwar in Richtung reaktorseitiges Ende des Schauglases.

Reaktorseitiges Ende bedeutet das eine Ende des Tubus, das an einer Öffnung der Reaktorwand montiert ist.

Um den zweiten Spülgasstrom in den Tubus des Schauglases einzubringen, sind vorzugsweise schräg zur Reaktormitte ausgerichtete Bohrungen im Tubus vorhanden.

Durch das Einbringen des weiteren Spülgasstromes entsteht im Schauglastubus ein Strömungsregime, das unabhängig von der zugeführten Spülgasmenge ist.

Hierdurch wird eine an den Prozess angepasste Regelung der zur Schauglasspülung benötigten Spülgasmenge ermöglicht, ohne die Qualität der Schauglasspülung zu verschlechtern.

Als Spülgas eignen sich folgende Gase bzw. beliebige Kombinationen als Gasgemisch: Edelgase (z.B. Ar, He), Stickstoff, Chlorsilane der Form $SiH_nCl_{n-4}$, n=0-4 in Verbindung mit einem chlorsilanfreiem Gas (z.B. $SiCl_4$ mit Wasserstoff), Wasserstoff, HCl-Gas.

Besonders bevorzugt wird Wasserstoff verwendet.

## Kurzbeschreibung der Figuren

**Fig. 1**     zeigt äußerst schematisch einen Abscheidereaktor mit Schauglas.

**Fig. 2**     zeigt eine Ausführungsform der Erfindung im Längsschnitt.

**Fig. 3**     zeigt eine Ausführungsform der Erfindung im Querschnitt durch den Tubus.

**Liste der verwendeten Bezugszeichen**

**1**     Abscheidereaktor
**2**     Schauglas
**3**     Glasscheibe
**4**     Bohrung(en) für Spülmassenstrom **M1**
**5**     Bohrung(en) für Spülmassenstrom **M2**

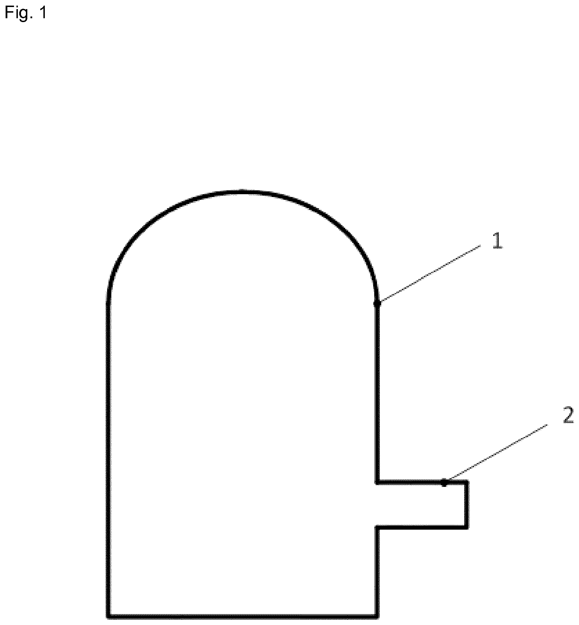

**Fig. 1** zeigt einen Abscheidereaktor **1** und ein an der Reaktorwand befestigtes Schauglas **2**.

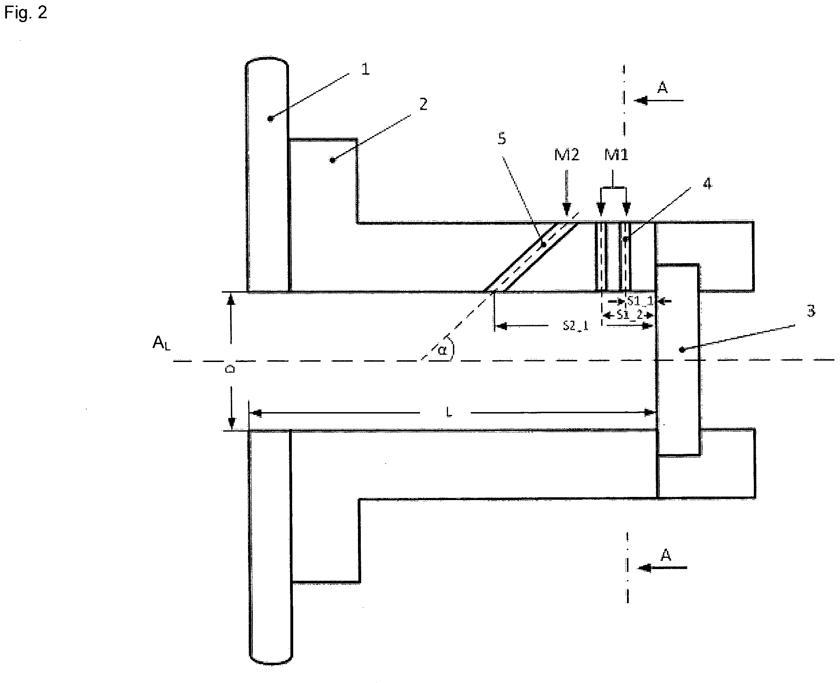

**Fig. 2** zeigt einen Abscheidereaktor **1** und ein an der Reaktorwand befestigtes Schauglas **2** mit einer Glasscheibe **3**. Das Schauglas **2** umfasst zwei Bohrungsreihen **4** für Spülmassenstrom **M1** und eine Bohrungsreihe **5** für Spülmassenstrom **M2**.

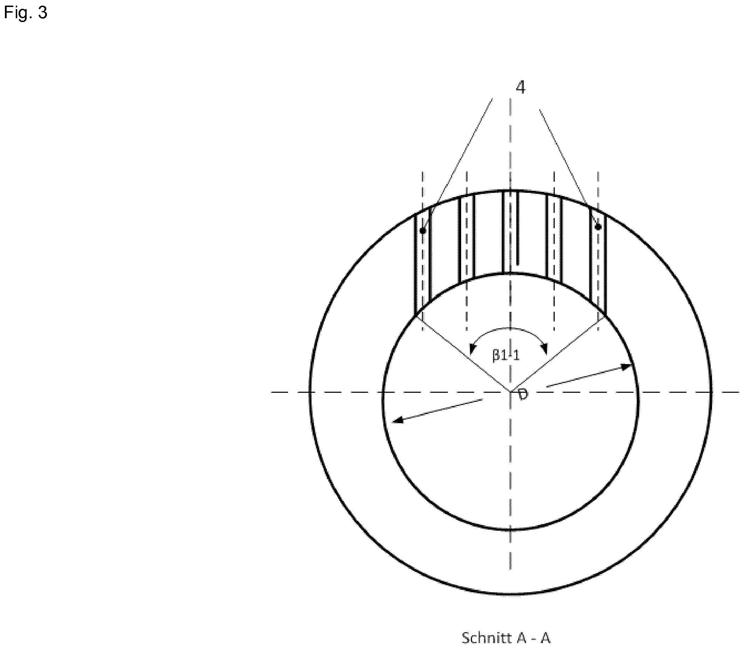

**Fig. 3** zeigt Schnitt A-A durch eine Bohrungsreihe **4** von **Fig. 2**. Es wird ersichtlich, dass mehrere zueinander parallele Bohrungen vorhanden sind. Der Reaktor (1) zur Herstellung von polykristallinem Silicium, umfasst wenigstens ein tubusförmiges Schauglas (2), dass mit einem reaktorseitigen Ende an einer Öffnung in der Reaktorwand befestigt ist und am anderen Ende eine Glasfläche aufweist, im Schauglastubus in Bohrungsreihen (n, k) angeordnete Bohrungen (4, 5) zur Zuführung eines Spülgases, dadurch gekennzeichnet, dass zur Zuführung eines Spülgasstroms M1 parallel zur Glasfläche verlaufende und in einem axialen Abstand S1_n von der Glasfläche des Schauglases (2) Bohrungen (4) angeordnet sind, wobei ein Verhältnis D/S1_n zwischen einem Tubusdurchmesser D und dem axialen Abstand S1_n einer Bohrungsreihe (n), umfassend die parallel zur Glasfläche verlaufenden Bohrungen (4), von der Glasfläche größer als 1 und kleiner als 40 beträgt und wobei von diesen parallel zur Glasfläche verlaufenden Bohrungen (4) in Richtung reaktorseitiges Ende des Schauglases (2) beabstandet, schräg in Richtung des reaktorseitigen Endes des Schauglases (2) ausgerichtete Bohrungen (5) zur Zuführung wenigstens eines weiteren Spülgasstroms M2 angeordnet sind.

Die Erfindung ermöglicht die Verwendung von Schaugläsern mit vergleichsweise kleinen Tubus-/Baulängen.

So ist ein Verhältnis L/D von Tubuslänge L zu Tubusdurchmesser D von 0,5 - 4,0 bevorzugt.

Besonders bevorzugt beträgt das Verhältnis L/D = 0,7 - 3,0 ganz besonders bevorzugt 1,0-2,0.

Vorzugsweise erfolgt die Eindüsung eines ersten Teils M1 des Spülgases über eine oder mehrere gegeneinander versetzte Bohrungsreihen.

Diese Bohrungsreihen sind an einer Seite des Tubusses, vorzugsweise der oberen Seite in einem Winkelbereich $\beta1\_n$ (n=Index für Lochreihe) von 40° - 180°, bevorzugt 50° - 130°, besonders bevorzugt 60° - 120° t um die Vertikale angebracht. Ein Drehen des Winkelbereichs $\beta1\_n$ inklusive der Bohrungen um 0 - 180° um die Tubusachse (Abweichung von der Vertikalen) ist möglich.

Der Abstand der Bohrungen innerhalb einer Reihe kann zur jeweiligen Nachbarbohrung innerhalb der Reihe verschieden oder gleich groß sein, bevorzugt ist er gleich groß.

Bohrungen sind vorzugsweise so positioniert, dass ihre Austrittsöffnungen am Schauglastubus innerhalb des Winkelbereichs $\beta1\_n$ liegen.

Die Bohrungsreihen sind vorzugsweise zueinander und zur Glasfläche parallel ausgerichtet.

Alle Bohrungen sind vorzugsweise untereinander ebenfalls parallel und auf die gegenüberliegende Tubuswand ausgerichtet.

Dadurch wird ein breiter Spülgasvorhang vor die Glasfläche gelegt.

Das Spülgas wird erfindungsgemäß in zwei Teilströme (M1 und M2) aufgeteilt. M1 entspricht dem parallel zur Glasfläche verlaufenden Gasstrom, M2 dem schräg verlaufenden Gasstrom, siehe auch **Fig. 2**.

Das Verhältnis der Spülmassenströme wird vorzugsweise folgendermaßen eingestellt: 1/3 < M1/M2 < 20.

Besonders bevorzugt gilt 1 < M1/M2 < 15, ganz besonders bevorzugt 2 < M1/M2 < 10.

Die Querschnittsfläche des Tubus ($A_T$) bezogen auf die Gesamtfläche ($A_{M1}$) aller Bohrungen des ersten Teils des Spülgases (M1)liegt vorzugsweise im Bereich 8 < $A_T/A_{M1}$ < 300, besonders bevorzugt 12 < $A_T/A_{M1}$ < 150 und ganz besonders bevorzugt 15 < $A_T/A_{M1}$ < 80.

Die Anzahl (N) der Bohrungsreihen, über die der erste Teil des Spülgases eingebracht wird, beträgt 1 <= N <= 5, bevorzugt: 1 <= N <= 3.

Das Verhältnis zwischen dem Tubusdurchmesser (D) und den axialen Abständen S1_n der Bohrungsreihen von der Schauglasfläche liegt vorzugsweise im Bereich 1 < D/S1_n < 40, besonders bevorzugt 1,5 < D/S1_n < 20 und ganz besonders bevorzugt 1,5< D/S1_n< 10.

Falls Abstände von Bohrungen oder Bohrungsreihen angegeben sind, werden diese jeweils ausgehend von der geometrischen Achse der Bohrungen angegeben.

Zur Eindüsung des zweiten Teils des Spülgases (M2) schräg zur Tubusachse werden vorzugsweise Bohrungsreihen verwendet, die ebenfalls vorzugsweise auf der oberen Seite des Tubus in einem Winkelbereich β2_n (n=Index für Lochreihe) von 40° - 180°, besonders bevorzugt 50° - 130°, ganz besonders bevorzugt 60° - 120°, um die Vertikale angebracht sind. Ein Drehen des Winkelbereichs β2_n inklusive der Bohrungen um 0 - 180° um die Tubusachse (Abweichung von der Vertikalen) ist möglich.

Der Abstand der Bohrungen innerhalb einer Reihe kann zur jeweiligen Nachbarbohrung innerhalb der Reihe verschieden oder gleich groß sein, bevorzugt ist er gleich groß.

Die Bohrungen sind vorzugsweise so positioniert, dass ihre Austrittsöffnungen am Schauglastubus innerhalb des Winkelbereichs β2_n liegen.

Alle Bohrungen des zweiten Teils des Spülgases (M2) sind vorzugsweise zueinander parallel und in einem Winkelbereich $\alpha$ von 10° - 80°, besonders bevorzugt 20° - 70°, ganz besonders bevorzugt 30° - 60° zur Tubusachse in Richtung reaktorseitiges Ende des Tubusses ausgerichtet.

Die Querschnittsfläche des Tubus ($A_T$) bezogen auf die Gesamtfläche ($A_{M2}$) aller schräg zur Tubusachse ausgerichteten Bohrungen liegt vorzugweise im Bereich $5 < A_T/A_{M2} < 500$, besonders bevorzugt: $20 < A_T/A_{M2} < 300$ und ganz besonders bevorzugt $40 < A_T/A_{M2} < 150$.

Die Anzahl (K) der Bohrungsreihen des zweiten Teils des Spülwasserstoffs beträgt $1 <= K <= 5$ vorzugsweise $1 <= K <= 3$.

Das Verhältnis zwischen dem Tubusdurchmesser (D) und dem axialen Abstand (S2_k,) der Austritte der Bohrungen (schräg zur Tubusachse) bzw. Bohrungsreihen von der Schauglasfläche liegt vorzugsweise im Bereich $0,4 < D/S2\_k < 40$, besonders bevorzugt $0,6 < D/S2\_k < 20$ und ganz besonders bevorzugt ($0,8 < D/S2\_k < 10$). Da die Bohrungen schräg verlaufen, sind die Abstände relativ zur geometrischen Achse der Bohrungen an den Bohrlöchern auf der Innenfläche des Tubus angegeben, vgl. **Fig. 2.** Somit wird ein Verfahren zur Herstellung von polykristallinem Silicium bereitgestellt, umfassend Einleiten eines Reaktionsgases enthaltend eine Silicium enthaltende Komponente und Wasserstoff in einen Reaktor (1) enthaltend wenigstens einen erhitzten Filamentstab, auf dem polykristallines Silicium abgeschieden wird, wobei der Reaktor (1) wenigstens ein tubusförmiges Schauglas (2) umfasst, das mit einem reaktorseitigen Ende an einer Öffnung in der Reaktorwand befestigt ist und am anderen Ende eine Glasfläche aufweist, wobei über in Bohrungsreihen (n, k) angeordneten Bohrungen (4, 5) im Schauglastubus während der Abscheidung ein Spülgas zugeführt wird, dadurch gekennzeichnet, dass ein Spülgasstrom M1 in einem axialen Abstand S1_n von der Glasfläche des Schauglases (2) und im Wesentlichen parallel zu der Glasfläche verläuft, wobei ein Verhältnis D/S1_n zwischen einem Tubusdurchmesser D und dem axialen Abstand S1_n einer Bohrungsreihe (n), umfassend parallel zur Glasfläche verlaufende Bohrungen (4), von der Glasfläche größer als 1 und kleiner als 40 beträgt und wobei von dem Spülgasstrom M1 in Richtung reaktorseitiges Ende des Schauglases (2) beabstandet wenigstens ein weiterer Spülgasstrom M2 in Richtung des reaktorseitigen Endes des Schauglases (2) geneigt verläuft.

Durch das erfindungsgemäße Verfahren mit seinen bevorzugten Ausführungsformen wird ein Kontakt zwischen Reaktionsgas aus dem Reaktor und innenliegenden, reaktorseitigen Glasfläche des Schauglases nahezu vollständig unterdrückt. Dadurch werden Ablagerungen an der Glasfläche des Schauglases komplett verhindert.

Das Strömungsfeld im Schauglas ist unabhängig von der Spülgasmenge. Daher können bei Bedarf stark unterschiedliche Spülgasmengen verwendet werden, ohne dass die Qualität der Spülung durch sich ändernde Strömungsverhältnisse verschlechtert wird.

**Beispiele**

Bei den Tests der unterschiedlichen Schauglastypen wurde ein Standardprozess mit einer Chlorsilankonzentration von 20% (Molfraktion) in $H_2$ verwendet.

Bei diesem Prozess bildet sich normalerweise ein ausgeprägter Belag an den Reaktorwänden aus.

Der Zieldurchmesser der abzuscheidenden Siliziumstäbe war 150 mm.

**Vergleichsbeispiel**

Tubus: L/D = 2 und D=50 mm Das Schauglas besaß eine Bohrungsreihe im Abstand S1_1 von 10 mm von der Glasfläche.

Die Bohrungen waren parallel zur Glasfläche an der oberen Hälfte des Schauglastubus angeordnet und in Richtung der Tubusachse ausgerichtet.

Alle 30° war eine Bohrung mit 4 mm Bohrungsdurchmesser angebracht (insgesamt 7 Bohrungen). Weitere Spülgaseindüsungen waren nicht vorhanden.

Das Schauglas wurde mit 30 Nm$^3$/h $H_2$ über die Bohrungen gespült.

Während des Abscheideprozesses bildete sich bei allen Chargen ein deutlich sichtbarer Belag auf der reaktorseitigen Glasoberfläche aus. Dieser setzte sich aus amorphen Verbindungen zusammen, bestehend aus: Chlor, Silizium und Wasserstoff.

Aufgrund der Beläge wurden die Temperaturmessungen verfälscht.

Der Abscheideprozess musste vorzeitig bei allen Chargen im Stabdurchmesserbereich von 110-130 mm aufgrund einer zu hohen elektrischen Leistungsaufnahme beendet werden.

Aufgrund der resultierenden hohen Stabtemperaturen wurde eine verstärkte Bildung von Popcorn festgestellt.

**Beispiel 1**

Tubus: L/D = 2 und D = 50 mm.

Das Schauglas besaß zwei zueinander versetzte Bohrungsreihen im Abstand S1_1 = 15 mm und S1_2 = 25 mm von der Glasfläche.

Der Spülgasmassenstrom wurde in zwei Teilströme aufgespalten. Der erste Teilstrom M1 wurde parallel zur Schauglasfläche nahe am Schauglas zugeführt.

Hierzu waren Bohrungen oben am Schauglastubus in einem Winkelbereich von $\beta1\_1 = 119°$ um die Nullgradlinie (Vertikale) angeordnet. Die Bohrungen waren parallel zur Glasfläche und vertikal nach unten ausgerichtet. Die erste Reihe besteht aus 5 Bohrungen mit Bohrungsdurchmessern von jeweils 2 mm. Die mittlere Bohrung war auf der Vertikalen angebracht. Jeweils zwei weitere Bohrungen waren symmetrisch zur Vertikalen im Abstand von $\pm$ 10,3 mm bzw. $\pm$ 20,5 mm zur Vertikalen angebracht. Die zweite Bohrungsreihe bestand aus vier Bohrungen mit Bohrungsdurchmessern von jeweils 2 [mm], die versetzt zur ersten Bohrungsreihe an horizontalen Abständen (jeweils zwei mit $\pm$ 5,1 mm und $\pm$ 15,4 mm) symmetrisch zur Vertikalen angebracht waren.

Der zweite Teil des Spülgasstromes wurde schräg zur Tubusachse unter einem Winkel von $\alpha = 30°$ (Winkel zur Tubusachse) in Richtung des Reaktors durch zueinander parallele Bohrungen eingedüst. Eine Reihe von vier Bohrungen war oben am Schauglastubus in einem Winkelbereich von $\beta 2\_1 = 108°$ um die Nullgradlinie (Vertikale) angeordnet. Die Bohrungen hatten einen Durchmesser von 2 mm. Jeweils zwei Bohrungen waren symmetrisch zur Vertikalen im Abstand von $\pm$ 9,6 mm bzw. $\pm$ 19,2 mm zur Vertikalen angebracht. Die Austrittsöffnungen der Bohrungen befanden sich in einem Abstand von S2_1 = 55 mm von der Glasfläche.

Das Schauglas wurde mit 20 Nm$^3$/h H$_2$ über die Bohrungen gespült. Das Verhältnis der Spülmassenströme M1/M2 war 3.

Während des Abscheideprozesses bildete sich bei allen Chargen kein sichtbarer Belag auf der reaktorseitigen Glasoberfläche aus.

Der Abscheideprozess erreichte bei allen Chargen den Stabenddurchmesser von 150 mm. Die Chargen wiesen keinen erhöhten Popcornanteil auf.

**Beispiel 2**

Tubus: L/D = 1,3 und D=75 mm

Das Schauglas besaß zwei zueinander versetzte Bohrungsreihen im Abstand S1_1 = 15 mm und S1_2 = 25 mm von der Glasfläche.

Der Spülgasmassenstrom wurde in zwei Teilströme aufgespaltet. Der erste Teilstrom wurde parallel zur Schauglasfläche nahe am Schauglas zugeführt.

Hierzu waren Bohrungen oben am Schauglastubus in einem Winkelbereich von $\beta1\_1 = 119°$ um die Nullgradlinie (Vertikale) angeordnet. Die Bohrungen waren parallel zur Glasfläche und vertikal nach unten ausgerichtet. Die erste Reihe besteht aus 7 Bohrungen mit Bohrungsdurchmessern von jeweils 3 mm. Die mittlere Bohrung war auf der Vertikalen angebracht. Jeweils zwei weitere Bohrungen waren symmetrisch zur Vertikalen im Abstand von $\pm$ 10,3 mm, $\pm$ 20,5 mm bzw. $\pm$ 30,8 mm zur Vertikalen angebracht. Die zweite Bohrungsreihe bestand aus sechs Bohrungen mit einem Bohrungsdurchmesser von jeweils 3 [mm], die versetzt zur ersten Bohrungsreihe waren. Jeweils 2 Bohrungen waren symetrisch zur Vertikalen in Abstand von $\pm$ 5,1 mm, $\pm$ 15,4 mm und $\pm$ 25,6 mm angebracht.

Der zweite Teil des Spülgasstromes wurde schräg zur Tubusachse unter einem Winkel von $\alpha = 60°$ (Winkel zur Tubusachse) in Richtung des Reaktors durch zueinander parallele Bohrungen eingedüst. Eine Reihe von vier Bohrungen war oben am Schauglastubus in einem Winkelbereich von $\beta 2\_1 = 65°$ um die Nullgradlinie (Vertikale) angeordnet. Die Bohrungen hatten einen Durchmesser von 2 mm. Jeweils zwei Bohrungen waren symmetrisch zur Vertikalen im Abstand von $\pm$ 9,6 mm bzw. $\pm$ 19,2 mm zur Vertikalen angebracht. Die Austrittsöffnungen der Bohrungen befanden sich in einem Abstand von S2_1 = 65 mm von der Glasfläche.

Das Schauglas wurde mit 30 Nm$^3$ H$_2$ über die Bohrungen gespült. Alle Spülgaskanäle (M1 und M2) wurden über einen gemeinsamen Raum versorgt, welcher zentral gespeist wurde. Das Verhältnis der Spülmassenströme ergab sich aus dem Querschnittsverhältnis $A_{M1}/A_{M2}$ und lag bei 7.

Während des Abscheideprozesses bildete sich bei allen Chargen kein sichtbarer Belag auf der reaktorseitigen Glasoberfläche aus.

Der Abscheideprozess erreichte bei allen Chargen den gewünschten Stabenddurchmesser von 150-160 mm. Die Morphologie der Chargen entsprach der Spezifikation.

## Patentansprüche

1. Verfahren zur Herstellung von polykristallinem Silicium, umfassend Einleiten eines Reaktionsgases enthaltend eine Silicium enthaltende Komponente und Wasserstoff in einen Reaktor (1) enthaltend wenigstens einen erhitzten Filamentstab, auf dem polykristallines Silicium abgeschieden wird, wobei der Reaktor (1) wenigstens ein tubusförmiges Schauglas (2) umfasst, das mit einem reaktorseitigen Ende an einer Öffnung in der Reaktorwand befestigt ist und am anderen Ende eine Glasfläche aufweist, wobei über in Bohrungsreihen (n, k) angeordneten Bohrungen (4, 5) im Schauglastubus während der Abscheidung ein Spülgas zugeführt wird, **dadurch gekennzeichnet, dass** ein Spülgasstrom M1 in einem axialen Abstand S1_n von der Glasfläche des Schauglases (2) und im Wesentlichen parallel zu der Glasfläche verläuft, wobei ein Verhältnis D/S1_n zwischen einem Tubusdurchmesser D und dem axialen Abstand S1_n einer Bohrungsreihe (n), umfassend parallel zur Glasfläche verlaufende Bohrungen (4), von der Glasfläche größer als 1 und kleiner als 40 beträgt und wobei von dem Spülgasstrom M1 in Richtung reaktorseitiges Ende des Schauglases (2) beabstandet wenigstens ein weiterer Spülgasstrom M2 in Richtung des reaktorseitigen Endes des Schauglases (2) geneigt verläuft.

2. Verfahren nach Anspruch 1, wobei das Spülgas ausgewählt wird aus der Gruppe bestehend aus Edelgase, Stickstoff, Chlorsilane der Form $SiH_nCl_{n-4}$, n=0-4 in Verbindung mit einem chlorsilanfreien Gas, Wasserstoff, HCl und Gemischen der genannten Gase.

3. Verfahren nach einem der Ansprüche 1 oder 2, wobei das Verhältnis der Spülmassenströme M1/M2 mehr als 1/3 und weniger als 20 beträgt.

4. Verfahren nach einem der Ansprüche 1 bis 3, wobei Spülgasstrom M2 über eine oder mehrere Bohrungen (5), deren geometrische Achsen einen Winkelbereich $\alpha$ von 10°- 80° mit einer geometrischen Achse $A_L$ des tubusförmigen Schauglases (2) bilden, zugeführt wird.

5. Verfahren nach einem der Ansprüche 1 bis 4, wobei beide Spülgasströme über eine oder mehrere gegeneinander versetzte Bohrungsreihen (n, k), jeweils umfassend mehrere Bohrungen (4, 5), auf dem Schauglas (2) eingedüst werden.

6. Verfahren nach einem der Ansprüche 1 bis 5, wobei ein Verhältnis D/S2_k zwischen Tubusdurchmesser D und einem maximalen axialen Abstand S2_k einer Bohrungsreihe (k), umfassend gegenüber der Glasfläche in Richtung des reaktorseitigen Endes des Schauglases (2) geneigte parallel verlaufende Bohrungen (5), von der Glasfläche größer als 0,4 und kleiner als 40 beträgt.

7. Reaktor (1) zur Herstellung von polykristallinem Silicium, umfassend wenigstens ein tubusförmiges Schauglas (2), dass mit einem reaktorseitigen Ende an einer Öffnung in der Reaktorwand befestigt ist und am anderen Ende eine Glasfläche aufweist,
im Schauglastubus in Bohrungsreihen (n, k) angeordnete Bohrungen (4, 5) zur Zuführung eines Spülgases,
**dadurch gekennzeichnet, dass**
zur Zuführung eines Spülgasstroms M1 parallel zur Glasfläche verlaufende und in einem axialen Abstand S1_n von der Glasfläche des Schauglases (2) Bohrungen (4) angeordnet sind, wobei ein Verhältnis D/S1_n zwischen einem Tubusdurchmesser D und dem axialen Abstand S1_n einer Bohrungsreihe (n), umfassend die parallel zur Glasfläche verlaufenden Bohrungen (4), von der Glasfläche größer als 1 und kleiner als 40 beträgt und wobei von diesen parallel zur Glasfläche verlaufenden Bohrungen (4) in Richtung reaktorseitiges Ende des Schauglases (2) beabstandet, schräg in Richtung des reaktorseitigen Endes des Schauglases (2) ausgerichtete Bohrungen (5) zur Zuführung wenigstens eines weiteren Spülgasstroms M2 angeordnet sind.

8. Reaktor nach Anspruch 7, wobei ein Verhältnis L/D von Tubuslänge L zu Tubusdurchmesser D 0,5 - 4,0 beträgt.

9. Reaktor nach Anspruch 7 oder 8, wobei die Bohrungen (4, 5) einer Bohrungsreihe (n, k) jeweils innerhalb eines Winkelbereiches ($\beta1\_n$, $\beta2\_n$) von 40° - 180° bezüglich eines Innenquerschnitts des Schauglases (2) angeordnet sind.

10. Reaktor nach einem der Ansprüche 7 bis 9, wobei ein Verhältnis D/S2_k zwischen Tubusdurchmesser D und einem maximalen axialen Abstand S2_k einer Bohrungsreihe (k), umfassend gegenüber der Glasfläche in Richtung des reaktorseitigen Endes des Schauglases (2) geneigte parallel verlaufende Bohrungen (5), von der Glasfläche größer als 0,4 und kleiner als 40 beträgt.

11. Reaktor nach einem der Ansprüche 7 bis 10, wobei der Querschnitt des Tubus $A_T$ bezogen auf den Gesamtquerschnitt $A_{M2}$ aller zum Zuführen von Spülgasstrom M2 vorgesehenen Bohrungen (5) größer als 5 und kleiner als 500 beträgt.

## Claims

1. Process for producing polycrystalline silicon, comprising introduction of a reaction gas comprising a silicon-containing component and hydrogen into a reactor (1) containing at least one heated filament rod on which polycrystalline silicon is deposited, said reactor (1) comprising at least one tubular sightglass (2) secured to an orifice in the reactor wall by a reactor end and having a glass surface at the other end, with supply of a purge gas through holes (4, 5) arranged in rows of holes (n, k) in the sightglass tube during the deposition, **characterized in that** one purge gas stream M1 runs at an axial separation S1_n from the glass surface of the sightglass (2) and essentially parallel to the glass surface where a ratio D/S1_n between a tube diameter D and the axial separation S1_n of a row of holes (n), comprising holes (4) that run parallel to the glass surface, of the glass surface is greater than 1 and less than 40 and where, spaced apart from the purge gas stream M1 in the direction of the reactor end of the sightglass (2), at least one further purge gas stream M2 runs at an angle in the direction of the reactor end of the sightglass (2).

2. Process according to Claim 1, wherein the purge gas is selected from the group consisting of noble gases, nitrogen, chlorosilanes of the $SiH_nCl_{n-4}$ form, n = 0-4, in conjunction with a chlorosilane-free gas, hydrogen, HCl and mixtures of said gases.

3. Process according to either of Claims 1 and 2, wherein the ratio of the purge mass flow rates M1/M2 is more than 1/3 and less than 20.

4. Process according to any of Claims 1 to 3, wherein purge gas stream M2 is supplied through one or more holes (5) having geometric axes that form an angle range $\alpha$ of 10°-80° with a geometric axis $A_L$ of the tubular sightglass (2).

5. Process according to any of Claims 1 to 4, wherein the two purge gas streams are injected via one or more mutually offset rows of holes (n, k), each comprising a plurality of holes (4, 5), in the sightglass (2).

6. Process according to any of Claims 1 to 5, wherein a ratio D/S2_k between tube diameter D and a maximum axial separation S2_k of a row of holes (k), comprising holes (5) that run parallel at an angle with respect to the glass surface in the direction of the reactor end of the sightglass (2), of the glass surface is greater than 0.4 and less than 40.

7. Reactor (1) for producing polycrystalline silicon, comprising
at least one tubular sightglass (2) that is secured to an orifice in the reactor wall by a reactor end and has a glass surface at the other end,
holes (4, 5) arranged in rows of holes (n, k) in the sightglass tube for supply of a purge gas, **characterized in that**,
for supply of a purge gas stream M1, holes (4) are arranged which run parallel to the glass surface and are at an axial distance S1_n from the glass surface of the sightglass (2), where a ratio D/S1_n between a tube diameter D and the axial separation S1_n of a row of holes (n) comprising the holes (4) that run parallel to the glass surface is greater than 1 and less than 40 for the glass surface, and where,
spaced apart from these holes (4) that run parallel to the glass surface in the direction of the reactor end of the sightglass (2), holes (5) for supply of at least one further purge gas stream M2 are arranged that are aligned obliquely in the direction of the reactor end of the sightglass (2).

8. Reactor according to Claim 7, wherein a ratio L/D of tube length L to tube diameter D is 0.5-4.0.

9. Reactor according to Claim 7 or 8, wherein the holes (4, 5) in a row of holes (n, k) are each arranged within an angle range (β1_n, β2_n) of 40°-180° with respect to an internal cross section of the sightglass (2).

10. Reactor according to any of Claims 7 to 9, wherein a ratio D/S2_k between tube diameter D and a maximum axial separation S2_k of a row of holes (k), comprising holes (5) that run parallel at an angle with respect to the glass surface in the direction of the reactor end of the sightglass (2), of the glass surface is greater than 0.4 and less than 40.

11. Reactor according to any of Claims 7 to 10, wherein the cross section of the tube $A_T$ based on the total cross section $A_{M2}$ of all the holes (5) provided for supply of purge gas stream M2 is greater than 5 and less than 500.


**Revendications**

1. Procédé de fabrication de silicium polycristallin, comprenant l'introduction d'un gaz de réaction contenant un composant contenant du silicium et de l'hydrogène dans un réacteur (1) contenant au moins une baguette chauffée sur laquelle le silicium polycristallin est déposé, le réacteur (1) comprenant au moins un verre d'observation en forme de barillet (2), qui est fixé à une extrémité du côté du réacteur à une ouverture dans la paroi du réacteur et comprend à l'autre extrémité une surface en verre, un gaz de rinçage étant introduit par des alésages (4, 5) agencés en des séries d'alésages (n, k) dans le barillet du verre d'observation pendant le dépôt, **caractérisé en ce qu'**un courant de gaz de rinçage M1 s'écoule à une distance axiale S1_n de la surface en verre du verre d'observation (2) et essentiellement parallèlement à la surface en verre, un rapport D/S1_n entre un diamètre du barillet D et la distance axiale S1_n entre une série d'alésages (n), comprenant des alésages (4) parallèles à la surface en verre, et la surface en verre étant supérieur à 1 et inférieur à 40, et au moins un autre courant de gaz de rinçage M2 s'écoulant en biais dans la direction de l'extrémité du côté du réacteur du verre d'observation (2) à une distance du courant de gaz de rinçage M1 dans la direction de l'extrémité du côté du réacteur du verre d'observation (2).

2. Procédé selon la revendication 1, dans lequel le gaz de rinçage est choisi dans le groupe constitué par les gaz nobles, l'azote, les chlorosilanes de forme $SiH_nCl_{n-4}$, n = 0 à 4 Conjointement avec un gaz exempt de chlorosilanes, l'hydrogène, HCl et les mélanges des gaz cités.

3. Procédé selon l'une quelconque des revendications 1 ou 2, dans lequel le rapport entre les débits massiques de rinçage M1/M2 est supérieur à 1/3 et inférieur à 20.

4. Procédé selon l'une quelconque des revendications 1 à 3, dans lequel le courant de gaz de rinçage M2 est introduit par un ou plusieurs alésages (5), dont les axes géométriques forment un champ angulaire $\alpha$ de 10° à 80° avec un axe géométrique $A_L$ du verre d'observation en forme de barillet (2).

5. Procédé selon l'une quelconque des revendications 1 à 4, dans lequel les deux courants de gaz de rinçage sont pulvérisés sur le verre d'observation (2) par une ou plusieurs séries d'alésages (n, k) décalées les unes par rapport aux autres, comprenant chacune plusieurs alésages (4, 5).

6. Procédé selon l'une quelconque des revendications 1 à 5, dans lequel un rapport D/S2_k entre le diamètre du barillet D et une distance axiale maximale S2_k entre une série d'alésages (k), comprenant des alésages (5) parallèles, inclinés par rapport à la surface en verre dans la direction de l'extrémité du côté du réacteur du verre d'observation (2), et la surface en verre est supérieur à 0,4 et inférieur à 40.

7. Réacteur (1) pour la fabrication de silicium polycristallin, comprenant
au moins un verre d'observation en forme de barillet (2), qu'est fixé à une extrémité du côté du réacteur à une ouverture dans la paroi du réacteur et comprend à l'autre extrémité une surface en verre,
des alésages (4, 5) agencés dans le barillet du verre d'observation en des séries d'alésages (n, k), pour l'introduction d'un gaz de rinçage,
**caractérisé en ce que**
des alésages (4) sont agencés parallèlement à la surface en verre et à une distance axiale S1_n de la surface en verre du verre d'observation (2) pour l'introduction d'un courant de gaz de rinçage M1, un rapport D/S1_n entre un diamètre du barillet D et la distance axiale S1_n entre une série d'alésages (n), comprenant les alésages (4) parallèles à la surface en verre, et la surface en verre étant supérieur à 1 et inférieur à 40, et des alésages (5) étant agencés à une distance de ces alésages (4) parallèles à la surface en verre dans la direction de l'extrémité du côté du réacteur du verre d'observation (2), orientés en biais dans la direction de l'extrémité du côté du réacteur du verre d'observation (2), pour l'introduction d'au moins un autre courant de gaz de rinçage M2.

8. Réacteur selon la revendication 7, dans lequel un rapport L/D entre la longueur du barillet L et le diamètre du barillet D est de 0,5 à 4,0.

**9.** Réacteur selon la revendication 7 ou 8, dans lequel les alésages (4, 5) d'une série d'alésages (n, k) sont agencés à chaque fois dans un champ angulaire ($\beta$1_n, $\beta$2_n) de 40° à 180° par rapport à une section transversale intérieure du verre d'observation (2).

**10.** Réacteur selon l'une quelconque des revendications 7 à 9, dans lequel un rapport D/S2_k entre le diamètre du barillet D et une distance axiale maximale S2_k entre une série d'alésages (k), comprenant des alésages (5) parallèles inclinés par rapport à la surface en verre dans la direction de l'extrémité du côté du réacteur du verre d'observation (2), et la surface en verre est supérieur à 0,4 et inférieur à 40.

**11.** Réacteur selon l'une quelconque des revendications 7 à 10, dans lequel la section transversale du barillet $A_T$ par rapport à la section transversale totale $A_{M2}$ de tous les alésages (5) prévus pour l'introduction d'un courant de gaz de rinçage M2 est supérieure à 5 et inférieure à 500.

Fig. 1

Fig. 2

Fig. 3

β1.1

4

Schnitt A - A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2077252 A2
- DE 102007047210 A1
- DE 102007023041 A1
- US 20120048178 A1
- US 5904981 A
- JP 2010254561 A
- CN 201302372 Y
- CN 102311120 B